Europäisches Patentamt

European Patent Office

Office européen des brevets

(19)

(11) Veröffentlichungsnummer: **0 193 633**
**A1**

(12) **EUROPÄISCHE PATENTANMELDUNG**

(21) Anmeldenummer: 85102500.7

(22) Anmeldetag: 06.03.85

(51) Int. Cl.⁴: **A 23 L 1/211**

(43) Veröffentlichungstag der Anmeldung: **10.09.86**
**Patentblatt 86/37**

(71) Anmelder: **KLingentalmühle AG, Klingental 17,**
**CH-4058 Basel (CH)**

(72) Erfinder: **Kurz, Oswald, Baselweg 10,**
**CH-4418 Reigoldswil (CH)**

(84) Benannte Vertragsstaaten: **AT CH DE FR GB IT LI NL**

(74) Vertreter: **Scheidegger, Zwicky, Werner & Co.,**
**Stampfenbachstrasse 48 Postfach, CH-8023 Zürich (CH)**

(54) Verfahren und Vorrichtung zur thermischen Behandlung von Sojabohnen.

㊾ Für die thermische Behandlung von Sojabohnen zwecks Entbitterung und Inaktivierung von Hemmstoffen werden die Sojabohnen in einen von einem länglichen Gehäuse (1, 2, 3) allseits umschlossenen Raum (4) durch einen an einem Ende des Raums in diesen mündenden Einlaßkanal (6) kontinuierlich eingebracht. Ein durch den ganzen Raum (4) sich hindurch erstreckender Stetigförderer besteht aus einer Welle (9) und auf einer Schraubenlinie in Winkelabständen an der Welle angeordneten Paddeln (10), welche die Sojabohnen kontinuierlich durch den geschlossenen Raum (4) hindurch zu einem Auslaßkanal (8) fördern und dabei intensiv umwälzen. Das zylindrische Gehäuse (1) besitzt einen über den größten Teil seiner Länge sich erstreckenden Doppelmantel (1, 12) und ist mittels in den ringförmigen Zwischenraum (13) in dem Doppelmantel eingeleitetem Dampf indirekt beheizt. Dadurch werden die Sojabohnen während ihrer Durchlaufzeit von 15–20 Min. von einem zum anderen Ende des beheizten Raums auf 100 bis 130°C erwärmt. Am Eintrittskanal (6) ist durch den Rückstau der Sojabohnen ein Produkteabschluss vorhanden, sodaß ein Dampfkocheffekt in dem geschlossenen Raum (4) hervorgerufen wird. Dieser bewirkt die Erreichung des Behandlungsziels ohne zusätzliche Auffeuchtung der Bohnen oder Verlust an Feuchtigkeit während der Behandlung. Der wesentliche Vorteil dieser thermischen Behandlung ist daher der geringe Energiebedarf, da insbesondere eine Trocknung und Wegführung vorher zugeführter Feuchtigkeit wie bei bekannten Verfahren entfällt.

0193633

## Verfahren und Vorrichtung zur thermischen Behandlung von Sojabohnen

Die Erfindung betrifft ein Verfahren und eine Vorrichtung zur thermischen Behandlung von Sojabohnen. Mit der Behandlung wird eine Entbitterung und eine Beseitigung der Hemmstoffe in den Sojabohnen bezweckt, um diese als Futtermittel und Lebensmittel verwenden zu können, da sie sehr eiweissreich und ölhaltig sind. Hemmstoffe, wie Trypsininhibitor und Urease, beeinträchtigen die Eiweissverwertung im tierischen Körper, weshalb sie möglichst weitgehend beseitigt werden müssen. Hierfür sind bereits verschiedene Verfahren bekannt, bei denen es sich um thermische und hydrothermische Wärmebehandlungsverfahren handelt, die eine sehr genaue Prozessführung erfordern, um bei ausreichender Reduzierung der Hemmstoffe eine Eiweiss-Schädigung zu vermeiden. Der Wärmeprozess hat auch Einfluss auf das in den Sojabohnen enthaltene Oel, welches ungesättigte Fettsäuren enthält, die zur unerwünschten Oxidation neigen, was die Lagerfähigkeit beeinträchtigt.

Bei dem hydrothermischen Verfahren werden die grob zerkleinerten Sojabohnen mit Dampf behandelt und dadurch einer intensiven feuchten Wärme bei ca. 90° ausgesetzt. Anschliessend erfolgt eine mechanische Behandlung durch Quetschen der Sojabohnen, was zu einer Verbesserung der Verfügbarkeit beim Oelgehalt führt. Das Produkt muss dann getrocknet werden, um die mit dem Dampf zugeführte Feuchtigkeit wieder zu entfernen, was einen entsprechend hohen Energieverbrauch zur Folge hat. Anschliessend kann das Produkt gekühlt und zu Mehl vermahlen werden.

Beim thermischen Verfahren erfolgt die Erwärmung durch Infrarotbestrahlung oder durch Heissluft, wobei jedoch in bevorzugter Weise durch Vornetzen ebenfalls eine Auffeuchtung der Sojabohnen erfolgt, um mit der Verdampfungswärme einen Schutz für das Eiweiss zu erreichen und die Temperaturspitzen besser steuern zu können. Auch hier muss die zugeführte Feuchtigkeit anschliessend energieaufwendig wieder entfernt werden. Die der vorliegenden Erfindung zugrunde liegende Aufgabe bestand daher darin, ein Verfahren und eine Vorrichtung zu schaffen, die dasselbe Behandlungsziel mit weniger apparativem Aufwand und insbesondere mit weniger Energieaufwand zu erreichen ermöglichen, von dem ein erheblicher Anteil für die Entfernung der vorher zugeführten Feuchtigkeit aufzubringen ist.

Zur Lösung dieser Aufgabe dient das Verfahren gemäss Anspruch 1. Dabei ist die Durchlaufzeit der Sojabohnen durch den beheizten Raum abhängig von der Grösse der Bohnen und der eingestellten Temperatur. Damit die Sojabohnen in innigen Kontakt mit der den Förderraum begrenzenden beheizten Fläche kommen, werden sie während des Durchlaufs vom Eintritts- zum Austrittsende durch die Fördereinrichtung intensiv umgewälzt. Ein besonderes Merkmal dieses Verfahrens ist der ohne Zuführung von Feuchtigkeit von aussen sondern nur auf Grund der eigenen Feuchtigkeit der Sojabohnen und der Wärmebehandlung entstehende Dampfkocheffekt, der durch den keine Feuchtigkeit entweichen lassenden Produkteabschluss durch die an der Eintrittsöffnung des Raumes frei nachrutschenden Sojabohnen zustande kommt. Der sich daraus ergebende Vorteil dieses Verfahrens besteht darin, dass die Sojabohnen nach der ohne Zugabe von zusätzlicher Feuchtigkeit durchgeführten Wärmebehandlung nicht getrocknet zu werden brauchen, sodass der für das Trocknen notwendige hohe Energieaufwand gespart wird. Die Vorrichtung zur Durchführung des Verfahrens hat daher einen wesentlich geringeren Energiebedarf als vergleichbare bekannte Vorrichtungen. Ein weiterer Vorteil besteht darin, dass das Behandlungsverfahren kontinuierlich durchgeführt wird und hinsichtlich der anzuwendenden Temperatur und der Durchlaufzeit leicht an die

0193633

jeweiligen Erfordernisse angepasst werden kann.

Die Erfindung wird nachfolgend anhand eines Ausführungsbeispiels der Vorrichtung zur Durchführung des Verfahrens
näher erläutert. Es zeigen:

Fig. 1  einen Längsschnitt durch die Vorrichtung,
        schematisch dargestellt;

Fig. 2  einen Querschnitt gemäss der Linie II-II in Fig. 1.

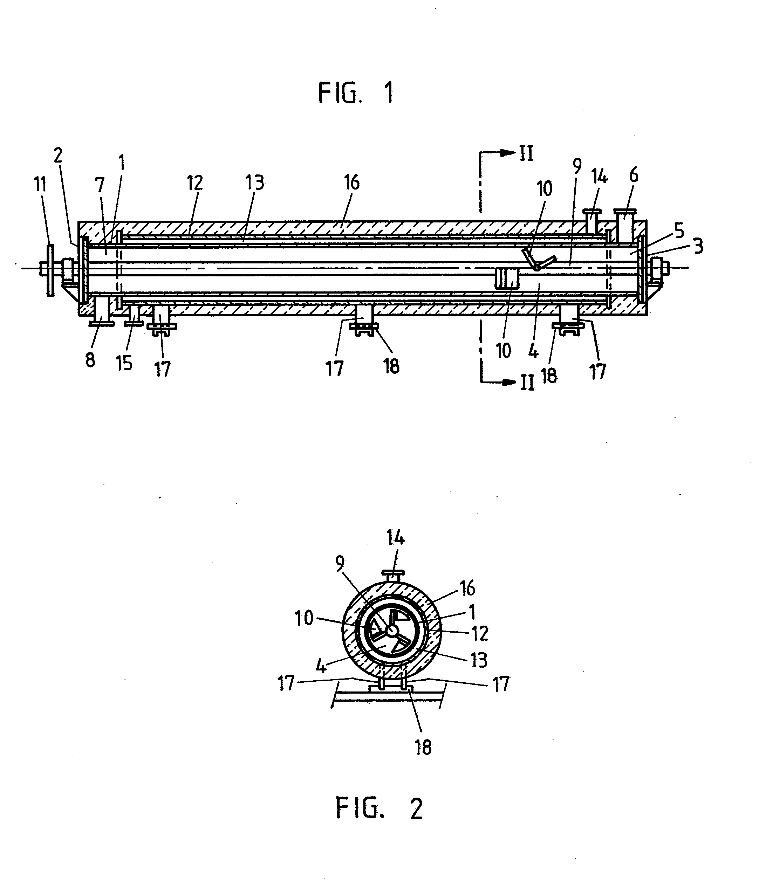

Die Vorrichtung zur Behandlung von Sojabohnen weist ein
zylindrisches Gehäuse 1 auf, das zusammen mit stirnseitigen Abschlusswänden 2 und 3 einen geschlossenen Raum 4 umschliesst. Am Eintrittsende 5 in Fig. 1 auf der rechten
Seite mündet ein Eintrittskanal 6 radial in den Raum 4,
welcher ferner am Austrittsende 7 mit einem radialen Austrittskanal 8 in Verbindung steht. Durch den Eintrittskanal 6 gelangen die Sojabohnen kontinuierlich in den Raum 4
innerhalb des Gehäuses 1 hinein und verlassen diesen durch
den Austrittskanal 8. Die Förderung der Sojabohnen vom Eintrittsende 5 zum Austrittsende 7 erfolgt durch einen aus
einer zur Gehäuseachse koaxial angeordneten Welle 9 und auf
dieser auf einer Schraubenlinie in Winkelabständen befestigten Paddeln 10 bestehenden Stetigförderer. Die Welle 9 ist
ausserhalb des Gehäuses 1 und der Abschlusswände 2 und 3
gelagert und wird an einem Wellenende durch eine geeignete
Antriebsvorrichtung 11 angetrieben. Die Paddel 10, von
denen in Fig. 1 nur zwei winkelversetzt angeordnete Paddel
dargestellt sind, sind über die ganze Länge der Welle 9 auf
einer Schraubenlinie und zueinander winkelversetzt, wie aus
Fig. 2 hervorgeht, angeordnet und bewirken, dass die Sojabohnen vom Eintrittsende 5 zum Austrittsende 7 stetig gefördert werden und dabei intensiv umgewälzt werden, damit die Sojabohnen allseitig mit der innenseitigen Fläche des Gehäuses 1, welche den Raum 4 für die Förderung der Sojabohnen begrenzt, in Berührung kommen.

Dieser Raum 4, durch den die Sojabohnen hindurchgefördert
werden, ist indirekt beheizt. Zu diesem Zweck ist das zylindrische Gehäuse 1 zwischen dem Einlasskanal 6 und dem Auslasskanal 8, das heisst über den wesentlichen Teil der Gesamtlänge, doppelwandig ausgebildet. Dabei schliessen das
zylindrische Gehäuse 1 und ein äusserer Mantel 12 einen
Ringraum 13 ein, der mit einer Zuleitung 14 für Dampf und
einer Ableitung 15 für das Kondensat in Verbindung steht.
Zum Schutz gegen Wärmeverlust ist der äussere Mantel 12 und
das übrige zylindrische Gehäuse 1 an den Endbereichen von
einer starkwandigen Isoliermaterialschicht 16 umschlossen.
Für die indirekte Beheizung wird in den Ringraum 13 zwischen
dem zylindrischen Gehäuse 1 und dem äusseren Mantel 12 Sattdampf mit einer Temperatur von $> 180^{\circ}$ C und einem Druck
von $> 10$ bar eingeleitet.

Durch die indirekte Beheizung werden die durch das zylindrische Gehäuse 1 geförderten Sojabohnen auf eine Temperatur
von $100^{\circ} - 130^{\circ}$ C erwärmt. Die Durchlaufzeit der Sojabohnen
vom Eintritts- zum Austrittsende des indirekt beheizten
Raums 4 beträgt ca. 15 - 20 Min., wobei die Durchlaufzeit
von der Grösse der Bohnen und der gewählten Temperatur abhängt. Die Durchlaufzeit lässt sich auf einfache Weise durch
Veränderung der Drehzahl des Stetigförderers 9, 10 ändern.

Die Sojabohnen füllen den Raum 4 innerhalb des Gehäuses 1
nicht gänzlich aus, damit sie intensiv umgewälzt werden
können. Die Bohnen werden über den Einlasskanal 6 ohne eine
davor angeordnete Dosiervorrichtung kontinuierlich beispielsweise aus einem Silo heraus zugeführt, was in der Zeichnung nicht dargestellt ist. Durch den dabei entstehenden Rückstau wird am Eintrittskanal 6 ein Produkteabschluss erzielt, wodurch innerhalb des die Sojabohnen enthaltenden
Raums 4 ein Dampfkocheffekt hervorgerufen wird, der die erwünschte Wirkung bei dieser Wärmebehandlung der Sojabohnen
erzeugt. Durch den Produkteabschluss wird auch erreicht,
dass nur ein sehr geringer Verlust der eigenen Feuchtigkeit
der Sojabohnen eintritt, so dass auf die Zugabe von zusätzlicher Feuchtigkeit in Form von Wasser verzichtet werden
kann.

Der Energieverbrauch in Form von Dampf der vorstehend beschriebenen Vorrichtung ist im Vergleich mit vorbekannten
Vorrichtungen deutlich geringer. Auch der Bedarf an elektrischer Energie ist sehr gering.

Die Ausgestaltung der Vorrichtung und der Verfahrensablauf
ermöglichen ferner auch auf einfache Weise eine Leistungssteigerung, indem man mehrere gleiche Vorrichtungen hintereinander anordnet, die die Sojabohnen nacheinander durchlaufen. Wegen der Erhitzung der Vorrichtung durch Dampf
muss die Ausdehnung verschiedener Teile der Vorrichtung
in unterschiedlichem Ausmass berücksichtigt werden, und
bei der Welle 9 für den Stetigförderer kommt man nur bei
einer bestimmten Länge ohne eine Zwischenlagerung der
Welle in der Mitte aus. Das zylindrische Gehäuse 1 der Vorrichtung ist daher vorzugsweise etwa 4 m lang. Für eine
starke Steigerung der Leistungsfähigkeit einer Anlage ist
es daher zweckmässiger, statt einer grossdimensionierten
Vorrichtung mehrere kleinere Vorrrichtungen gleichzeitig zu
betreiben.

Zum Ausgleich der Wärmedehnungen ist das von einem Mantel 16 aus Isolationsmaterial umschlossene zylindrische Gehäuse 1 mittels Kufen 17 auf einer aus Kunststoffmaterial bestehenden Gleitbahn 18 abgestützt.

## Patentansprüche

1. Verfahren zur thermischen Behandlung von Sojabohnen, dadurch gekennzeichnet, dass die Sojabohnen durch einen geschlossenen Raum (4) mittels einer in dem Raum angeordneten Fördereinrichtung (9, 10) von einem Eintrittsende (5) zu einem Austrittsende (7) in stetigem Durchlauf während einer Durchlaufzeit von 15 - 20 Minuten gefördert werden und der Raum (4) indirekt bis zur Erwärmung der Sojabohnen auf eine Temperatur von 100° bis 130° C beheizt wird.

2. Verfahren nach Anspruch 1, dadurch gekennzeichnet, dass die Sojabohnen entlang der innenseitigen Begrenzungsfläche (1) des beheizten Raums (4) in Kontakt mit dieser Fläche gefördert und dabei durch die Fördereinrichtung (9, 10) umgewälzt werden.

3. Verfahren nach Anspruch 1, dadurch gekennzeichnet, dass in dem Raum (4) infolge Produkteabschluss am Eintrittsende (5, 6) durch die frei nachrutschenden Sojabohnen ein Dampfkocheffekt erzeugt wird.

4. Verfahren nach einem der Ansprüche 1 bis 3, dadurch gekennzeichnet, dass der Raum (4), durch den die Sojabohnen gefördert werden, indirekt über seine Mantelfläche (1) mittels Sattdampf mit einer Temperatur von $\geq$ 180°C und einem Druck von $>$ 10 bar beheizt wird.

5. Vorrichtung zur Durchführung des Verfahrens nach Anspruch 1, dadurch gekennzeichnet, dass in einem von einem Gehäuse (1, 2, 3) umschlossenen Raum (4) eine Fördereinrichtung (9, 10) zur Förderung der Sojabohnen von einem im Bereich des Eintrittsendes (5) durch das Gehäuse (1) in den Raum (4) mündenden Eintrittskanal zu einem im Bereich des Austrittsendes (7) durch das Gehäuse (1) in in den Raum (4) mündenden Austrittskanal (8) angeordnet ist und dass die den Förderraum (4) umschliessende Mantelfläche (1) des Gehäuses ( 1,2,3) zur Erwärmung der innenseitig längs der Mantelfläche geförderten Sojabohnen beheizbar ist.

6.  Vorrichtung nach Anspruch 5, dadurch gekennzeichnet, dass in einem zylindrischen Gehäuse (1,2,3), das an den Stirnenden (2,3) geschlossen ist, ein aus einer zur Gehäuseachse koaxial angeordneten Welle (9) und an der Welle auf einer Schraubenlinie in Winkelabständen befestigten Paddeln (10) bestehender Stetigförderer (9,10) angeordnet ist, dessen Förderweg sich von dem in den Raum (4) innerhalb des Gehäuses mündenden Eintrittskanal (6) an dem einen Gehäuseende (5) bis zu dem in den Raum (4) innerhalb des Gehäuses mündenden Austrittskanal (8) am entgegengesetzten Gehäuseende (7) erstreckt, und dass das Gehäuse (1,2,3) mindestens über einen Teil seiner Länge doppelwandig ausgebildet ist und in den ringförmigen Raum (13) zwischen dem Doppelmantel (1, 12) eine Dampfzuleitung (14) zwecks Erwärmung der inneren Mantelfläche (1) mündet.

7.  Vorrichtung nach Anspruch 6, dadurch gekennzeichnet, dass der Stetigförderer (9, 10) ausserhalb des an den Stirnenden (2, 3) geschlossenen Gehäuses (1, 2, 3) gelagert ist und mit einer Antriebsvorrichtung (11) in Verbindung steht.

8.  Vorrichtung nach einem der Ansprüche 5 bis 7, dadurch gekennzeichnet, dass das mit seiner Achse im wesentlichen horizontal angeordnete zylinderische Gehäuse (1,2,3) zum Ausgleich von Wärmedehnungen mittels Kufen (17) auf Gleitbahnen (18) abgestützt ist.

0193633

FIG. 1

FIG. 2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 407 474 (KOEHRING CO.) <br><br> * Anspruch 1 * <br><br> --- | | A 23 L 1/211 |
| A | DE-B-1 238 318 (WENGER MANUFACTURING INC.) <br> * Anspruch 1 * <br><br> ----- | | |

RECHERCHIERTE
SACHGEBIETE (Int. Cl.4)

A 23 L 1/00

Der vorliegende Recherchenbericht wurde für alle Patentansprüche erstellt.

| Recherchenort | Abschlußdatum der Recherche | Prüfer |
|---|---|---|
| BERLIN | 23-10-1985 | SCHULTZE D |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82